# EUROPEAN PATENT SPECIFICATION

(11) **EP 2 903 428 B1**
(45) Date of publication and mention of the grant of the patent: **26.10.2016**
(21) Application number: 12809364.8
(22) Date of filing: 05.10.2012
(51) Int. Cl.: A01K 73/12

(54) **A NET CRANE WITH CORKLINE STACKER**
NETZKRAN MIT KORKLEINENSTAPELVORRICHTUNG
GRUE À FILET AVEC APPAREIL D'EMPILEMENT DE LIGNE DE FLOTTAISON

(43) Date of publication of application: 12.08.2015
(73) Proprietor: Triplex AS, 6530 Averoy (NO)
(72) Inventor: KIPPERNES, Anders, N-6530 Averøy (NO); ELLINGSVÅG, Asgeir, N-5630 Averøy (NO)
(74) Representative: Fluges patent as
(86) International application number: PCT/NO2012/050197
(87) International publication number: WO 2014/054950

(56) References cited:
- JP-A- H04 166 030
- JP-A- H04 173 040
- JP-A- 2008 220 341
- NO-B1- 311 865

## Description

The present invention relates to a ring purse seine crane with a corkline stacker for a ring purse seine for use on a ring purse seiner vessel. More specifically, it relates to a net crane wherein a corkline stacker roller sheave is arranged on a specific corkline stacker arm mounted on the main arm of the net crane, and which moves together with this.

### Background art

Ring purse seiner vessels are provided with a net bin at the stern from where the ring purse seine is cast, i.e. runs out aft while the vessel runs forward along a large circular arc. It is common practice to let the ground line, which in general is a sinking line with rings for the purse wire, run out from starboard side of the vessel while the cork line with its floating elements runs out from the port side of the net bin. In this way one avoids entanglement of the top and bottom of the ring purse seine when it runs out. The purse hauling for encircling the catch is not described here. When the ring purse seine subsequently shall be hauled from the sea it is taken in by a net winch which is usually arranged at the starboard side and fed further up through the characteristically inclined funnel pipe to an auxiliary roller at the funnel pipe's outlet, to a mobile net layer roller which hangs in a horizontal position below a net crane. This is, from practical considerations, arranged port of the net bin in the stern part of the vessel. The net is laid down in the net bin with the corkline with its floating elements to the port side in the bin and with its crowfoot lines to steel rings to the port so as for again being prepared to be cast.

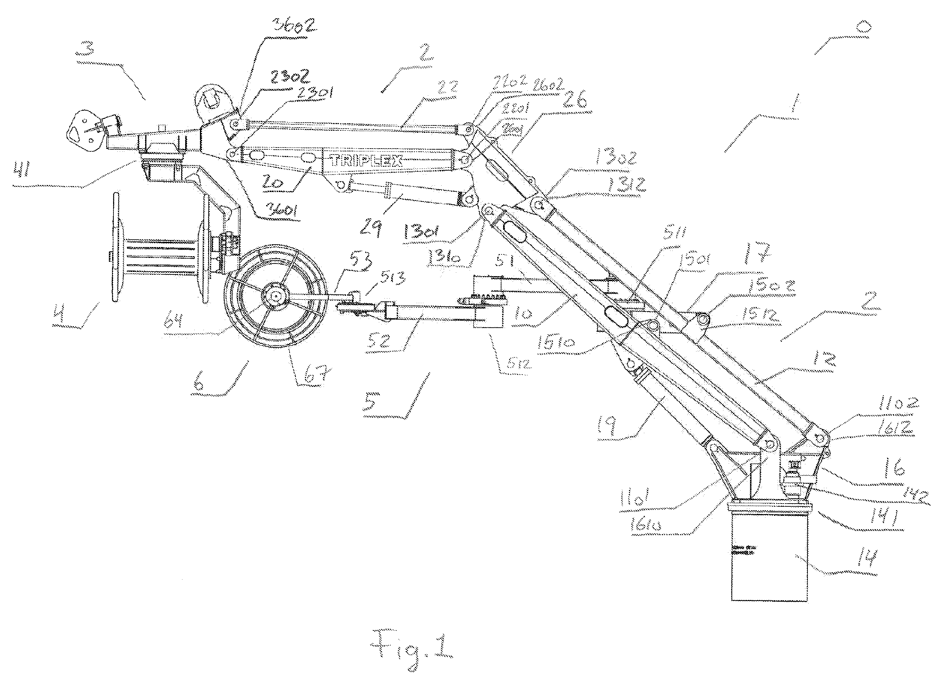

The company "Triplex as" manufactures a ring purse seine crane comprising, as counted from the base and out to the net roller, a slewing bearing with a rotating bracket or "king", a so-called vertical arm comprising a vertical crane beam and a vertical stay, both coupled in an intermediate link in their top ends, wherein said intermediate link holds a so-called horizontal arm comprising a horizontal crane beam and a corresponding horizontal stay. The horizontal crane beam holds, at its outer end, a somewhat smaller horizontal beam which carries underneath a revolving gear with a net roller yoke with a horizontally arranged motor driven suspension for the net layer roller. The background art construction is not very different from the main crane beam of the ring purse seine crane as such according to the present invention as shown in Fig. 1. The net crane and the net layer roller is steered from a control panel such that a net, during the net hauling, is laid in a desired manner in a net bin.

The ring purse seine comprises a corkline which is a line with floating elements along the upper rim of the ring purse seine. The net is hauled in via the starboard side of the vessel. The net as such will have the corkline to its starboard side and its ground line along the hull side. The entire net is hauled in by a so-called Triplex net drum, up through a net funnel and a net pipe, out via an auxiliary roller, runs to the net layer roller and down to the net bin. During the laying to the net bin it is important to have the net twisted by half a turn and get the upper rim of with the corkline extended toward the port side of the net bin so as for the corkline and the net to lay down more or less parallel and at each their place in the bin. This is so as for having the net in proper order for again being cast, towards the stern. There is no strict border in the bin between the place of the net and the corkline, but the net must literally not form any knots.

The separation of the corkline with its floating elements from the net and the laying of the corkline may be conducted manually, but may also be conducted by means of a so-called corkline layer. Norwegian patent NO311865 belonging to the applicant "Triplex AS" describes a crane boom arranged on a separate crane base, with a crane which holds a rotating propulsion sheave in two linked arms. The propulsion sheave comprises two opposite and motorized conical sheaves which are mutually approached so as for gripping about the floating elements and hauls in the floating elements of the corkline while the net passes between the middle portions of the conical sheaves. The net line gap in the propulsion sheave is adjustable in that at least one of the two mutually linked arms may be rotated. The corkline with the floating elements is quite voluminous and occupies about 40% of the volume of the net bin.

In background art arrangements on ring purse seiner vessels the net crane is arranged rotating on a crane base laterally of the net bin. The corkline stacker is also arranged rotating on a separate base another place adjacent to the net bin. The ring purse seine crane and the corkline stacker are steered turning the laying process by different operators who must mutually coordinate the laying process. There is a risk of mutual misunderstanding between the operators. There is also a risk of collision between the two cranes as they are separately controlled.

### Brief summary of the invention

The invention solves several of the above problems and is a ring purse seine crane as specified in independent claim 1, with a crane arm (0) with a net layer roller (4), with a corkline stacker arm (5) with a corkline stacker sheave (6), wherein said corkline stacker arm (5) is mounted on a corkline stacker bracket (17) directly on said crane arm (0), wherein the crane arm (0) comprises a vertical arm (1) which is rotatable in the vertical plane on a rotating bracket (16) which is rotatable about a vertical axis in a slewing bearing (141) on a crane base (14) in the ship's structure, wherein the corkline stacker bracket (17) is mounted on the vertical arm (1), and wherein the in the vertical plane rotatable vertical arm (1) comprises a vertical beam (10) and a parallel vertical stay (12), wherein the corkline stacker bracket (17) is attached mounted on bolts (1501,1502) in brackets (1510, 1512) on a vertical beam (10) and a vertical stay (12), so as for the corkline stacker bracket (17) to move with the same posture in space relative to the rotating bracket (16) and that the corkline stacker arm thus moves proportionately inwards and outwards with the net layer roller (4).

Preferred embodiments are set out in the dependent claims.

### Advantages of the invention

a) The invention results in that the corkline stacker arm needs on separate base in the vessel, a feature which saves space in the hull structure and which provides more space for the ring purse seine itself with its voluminous corkline, and weight. In particular for small purse seiner vessels this is a considerable advantage.
b) the net layer roller and the corkline stacker sheave may be made operable by one man in stead of two. The operator control panel, which preferably is wireless, may be arranged to control both. In an advantageous embodiment the corkline stacker sheave is arranged so as for its direction to follow the net layer roller.
c) reduced risk of collision between the net layer roller and the corkline stacker sheave because the extension from their common crane base for the corkline stacker roller in general follows the parallel beam and the crane beam with the net layer roller. One may, in the same system from one single provider, introduce barriers against collision, a feature which is difficult if there are two different control systems for two units from to providers.
d) Reduced risk of collision also in the mutually lateral direction between the crane parts because the corkline stacker arm will rotate with the net layer crane.
e) Swivels in the links of the corkline stacker arm constitute an essential improvement of the ability to rotate in the horizontal plane and the durability of the hydraulic lines in the corkline stacker arm, and thus the reliability of the ring purse seine crane according to the invention.
f) The ring purse seine crane according to the invention may be obtained by retrofitting the corkline stacker arm with the corkline stacker sheave on a crane according to the background art without considerable modifications, and a simple modification of the hydraulic/electronic control system.
g) Some vessels have an aft "large net bin" and a somewhat smaller "small net bin" ahead of this, on the starboard side. The ring purse seine crane according to the invention may extend to both of these net bins both with the net layer roller and the corkline stacker sheave.

### Brief figure captions

The invention is shown in embodiments in the attached figures, wherein
Fig. 1 is a left elevation view of a net crane with a corkline stacker arm according to the invention and named further as corkline layer arm. The corkline stacker sheave named further as corkline layer sheave is shown in an end view, straight into its axis, while the net layer roller is shown in side view normal to its axis. The net crane is here shown in a partially elevated, extended position with the horizontal arm arranged horizontally, and with the corkline layer arm extended in its horizontal reach to the same direction.

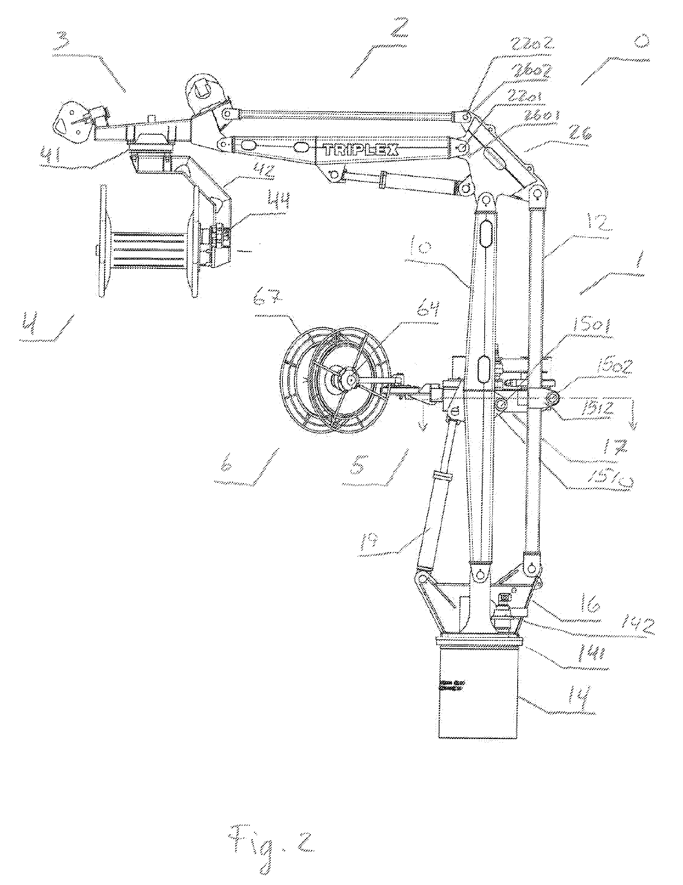

Fig. 2 is a side elevation view of the net crane in the same perspective as shown in Fig. 1, but with the vertical arm arranged vertically, and with the horizontal arm arranged horizontally as above. The corkline layer arm is here drawn out laterally and kinked in and so as for the corkline layer sheave is turned inwards under the net layer roller. Please notice that the crane arm on the horizontal arm always is horizontal in this embodiment of the invention, so as for the net layer rollers axis always to be horizontal.

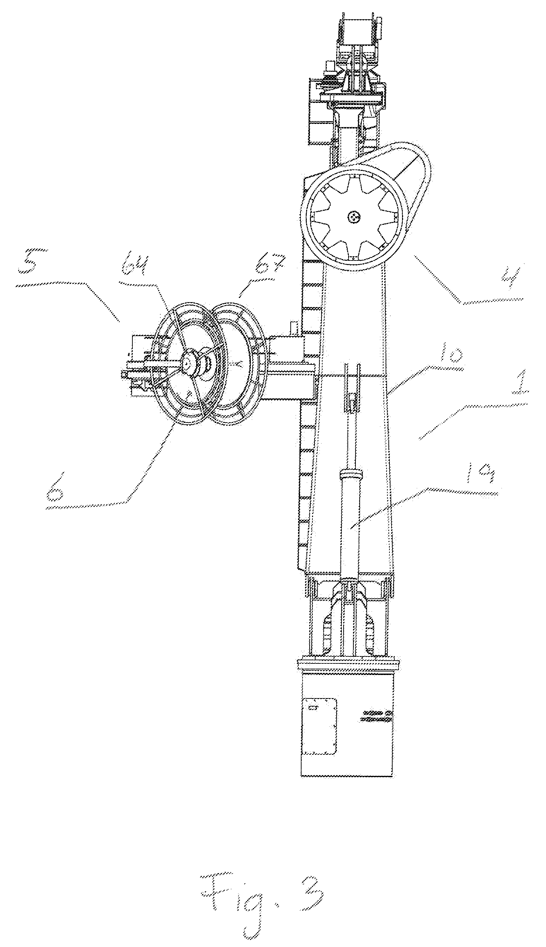

Fig. 3 is an end view orthogonal to the perspective shown in Fig. 2. The oval portion inclined upwards from the net layer roller is an extended portion of the shield of the net layer roller.

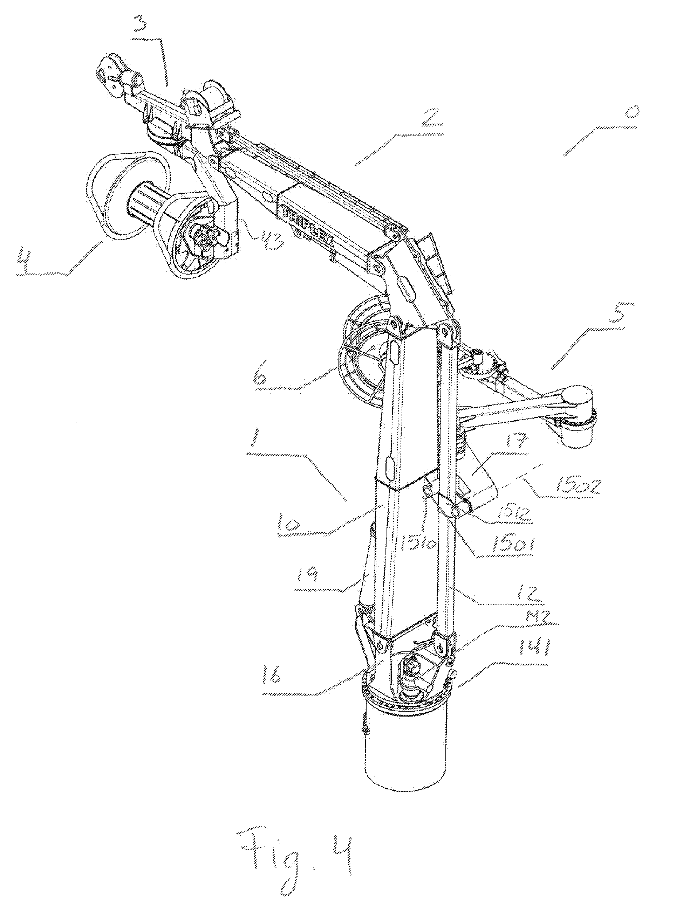

Fig. 4 is a perspective view of the net crane according to the invention in the same position as in Fig. 2 and Fig. 3, i.e. with the vertical arm positioned vertically, and the corkline layer arm considerably retracted but still on the same side of the vertical arm as the net layer roller.

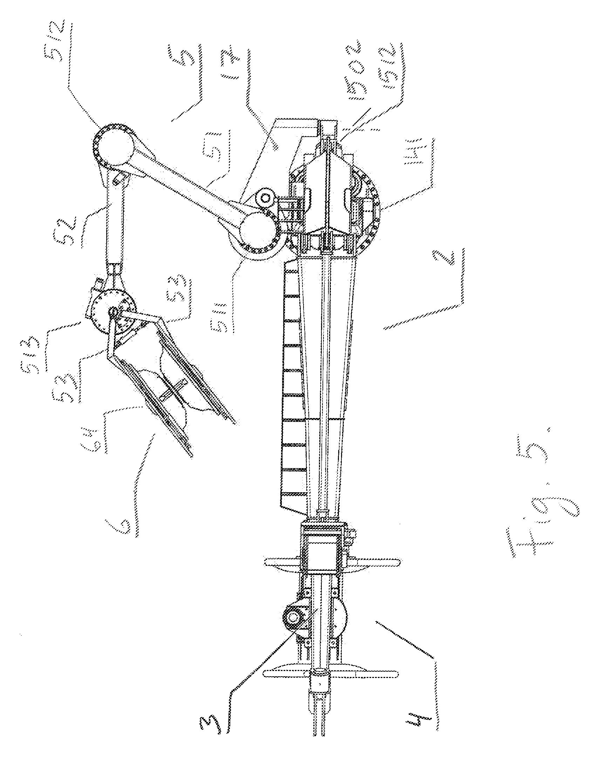

Fig. 5 is a plane view of the net crane according to the invention shown in the same posture as in Figs. 2, 3, and 4 above, with the vertical arm vertically. Please notice that the corkline stacker bracket for the corkline stacker arm named further as corkline layer bracket for the corkline layer arm is mounted on the lateral side of an otherwise existing net crane. Please also notice that the corkline layer sheave has an open gap (there is no through axis between the two conical sheaves that constitute the sheave halves) and that the gap is directed approximately in the direction of the outlet from the net layer roller, which is towards the top of the drawing. This relative orientation makes the corkline layer pull the corkline from the net's otherwise vertical path and places the corkline separately into the net bin.

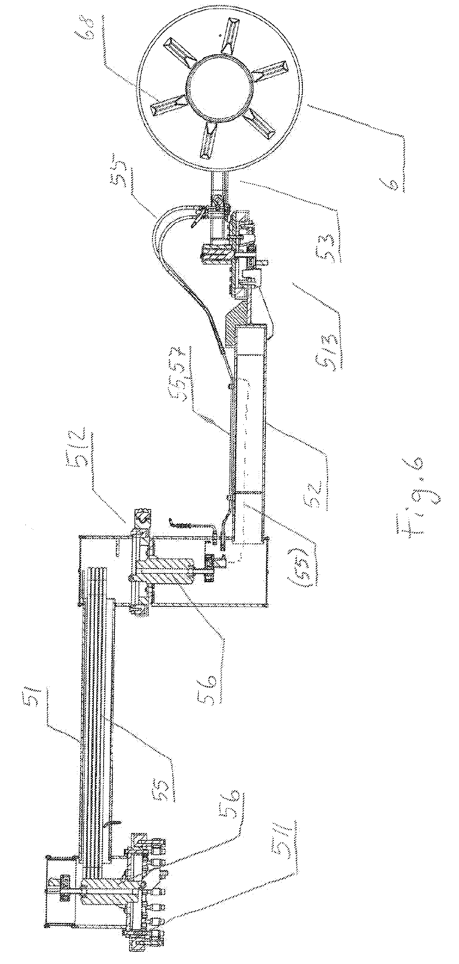

Fig. 6 is a longitudinal section through a totally extended embodiment of the corkline layer beam according to the invention and shows hydraulic lines and swivels in the links. Please also notice the engaging dogs (68) which are chamfered strip-shaped metal ridges radially on each of the two conical sheaves which constitute the corkline layer sheave (6).

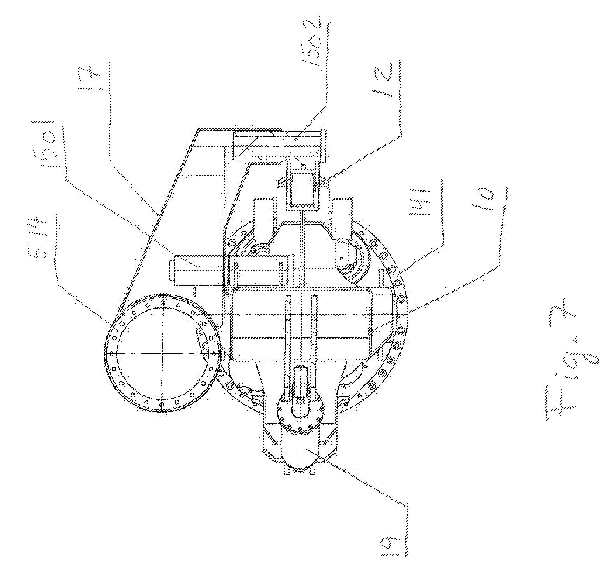

Fig. 7 is a partial top view and horizontal section through the vertical arm's (1) vertical beam (10), vertical stay (12) and the corkline layer bracket (17), as an enlarged section seen in the same perspective as for Fig. 5.

### Embodiments of the invention

### General on the ring purse seine crane of the invention

A net crane according to the invention is shown in Fig. 1. The invention is a net crane with a crane arm (0) carrying a net layer roller (4), wherein the crane arm (0) is provided with a corkline layer arm (5) mounted on a bracket (17) on the net crane (0), and wherein the corkline layer arm (5) as such carries a corkline layer sheave (6). An essential advantage of this arrangement is that the corkline layer arm (5) and thus the corkline layer sheave (6) will follow the movements of the net layer roller's (4) movements, and that this simplifies single operator operation of the two, the roller and the sheave. As such, one operator alone may guide the ring purse seine down into the net bin in the purse seiner vessel.

In the shown embodiment of the net crane the crane arm (0) comprises a vertical arm (1) on a rotating bracket (16) rotatable about a vertical axis of a slewing bearing (141) on a crane base (14) in the ship's structure. The corkline layer arm (5) is mounted on a corkline layer bracket (17) on the vertical arm (1).

In an embodiment of the invention the corkline layer bracket (17) comprises an inner slewing bearing (511) which holds an inner arm (51) which outer end has an elbow slewing bearing (512) which holds an outer arm (52) with an outer slewing bearing (513) which holds a corkline layer fork (54) with its corkline layer sheave (6). The shown corkline layer arm (5) thus resembles a right arm, thus with a large rotation arch up to between 180 and 270 degrees in the inner slewing bearing and more than 270 degrees in the elbow slewing bearing, please see Fig. 5.

According to the invention, the net crane has a crane arm (0) with a net layer roller (4), wherein the crane arm (0) comprises at least a vertical arm (1) which is rotatable in the vertical plane on a rotating bracket (16) which further is rotatable about a vertical axis in a slewing bearing (141) on a crane base (14), wherein said vertical arm (1) comprises a vertical beam (10) and a parallel vertical stay (12), said vertical arm provided with a corkline layer arm (5) with a corkline layer sheave (6), said corkline layer (5) is mounted on a corkline layer bracket (17) on bolts (1501, 1502) in brackets (1510, 1512) on said vertical beam (10) and said vertical stay (12), respectively.

The crane base (14) may preferably be in the ship's structure, alternatively on a carriage running on rails.

### About the corkline layer arm

The corkline layer arm (5) is thus mounted on a corkline layer bracket (17) directly on the vertical arm (1), so as for holding the corkline layer bracket (17) in a constant orientation relative to the horizontal plane. An advantage of mounting in the corkline layer bracket (17) in brackets (1510, 1512) with the same geometry as the brackets on the rotating bracket (16( below and the intermediate link (26) above, is that the forces between [from] the corkline layer bracket to a large degree will be exerted along the vertical stay (12) and the vertical beam (10) in the same way as the forces from the horizontal arm's (2) forces via the intermediate link (26) on the vertical stay (12) and the vertical beam (10). It is obvious that the maximum load on the net layer roller (4) must be reduced if a corkline layer arm according to the invention is retrofitted, in order to compensate for the extra moment which is exerted to the rotating bracket (16) and the vertical arm (1).

### About hydraulic power

According to an embodiment of the invention there is arranged hydraulic lines (55) on said corkline layer arm (5) for a corkline layer sheave motor (64). In the illustrated embodiment all actuators are hydraulically driven, such as the slewing bearing (141) on the rotating bracket (16), a hydraulic cylinder (19) which elevates and lowers the vertical arm (1), a hydraulic cylinder (29) which elevates and lowers the horizontal arm (2), the revolving gear (41) which rotates the net roller yoke (42) to a desired azimuthal direction, the horizontal drive (43) which rotates the net layer roller (4), and the corkline layer arm's (5) three slewing bearings (511, 512, 513). Hydraulic lines are in a preferred embodiment arranged from a hydraulic pump under deck, up through the crane base (14) in a hydraulic swivel in center of the motorized slewing bearing (141) below the rotating bracket (16), and via flexible connections in the link connections and preferably in straight pipes within the beams (10, 20, 3) and said corkline layer arm (5) respectively to the net layer roller (4) and the corkline layer sheave's (6) hydraulic motors.

A hydraulic actuator (19) rotates (elevates and lowers) the vertical arm (1) in its vertical plane. A corresponding hydraulic actuator (29) elevates and lowers the horizontal arm (2) so as for it to rotate in the same vertical plane. One or more hydraulic motors (142) in cooperation with the slewing bearing (141) rotates the vertical arm with the horizontal arm about the foundation's vertical axis. There are, in the shown embodiment, hydraulic motors or actuators for all absolute and relative motors. All motors and actuators are controlled by valves which further are controlled from an operator panel which may be wireless. An emergency control panel is also available.

### About the crane arm in general

According to an embodiment of the invention the vertical beam (10) and the vertical stay (12) are mounted by their lower ends in parallel bolts (1101, 1102) in bearing brackets (1610, 1612) on the rotating bracket, also named the "king" (16), and in their upper ends in parallel bolts (1301, 1302) in bearing brackets (1310, 1312) in an intermediate link (26) which further holds a vertically rotatable so-called horizontal arm (2) with a crane beam (3) which further holds the net layer roller (4). The intermediate link (26) thus does not rotate in the vertical plane or relative to the rotating bracket, it keeps its posture in space and follows the vertical arm's end's arch motion.

The vertical beam (10) is box-shaped, please see its section in Fig. 7, which narrows upwardly, please see Fig. 3, and has a kinked front portion, please see Fig. 2, in order to take up forces from the hydraulic cylinder (19).

Further, the vertically rotatable horizontal arm (2) may in a corresponding way comprise a parallel horizontal beam (20) and a parallel horizontal stay (22) mounted in bolts (2201, 2202) in bearing brackets (2601, 2602) in the intermediate link (26) and their outer ends mounted in bolts (3601, 3602) in bearing brackets (3601, 3602) in the inner end of the crane beam (3). In the embodiment shown the crane beam (3) is always horizontal so as for the net layer roller shall be horizontal. The net layer roller (4) is motorized and bearing on a horizontal pinion (43) on a net roller yoke (42) in a revolving gear (41) with a vertical axis and mounted underneath the crane beam (3).

In the embodiment shown the vertical beam (10) and the vertical stay (12) are mounted in their lower ends in parallel bolts (1101, 1102) in bearing brackets (1610, 1612) on the rotating bracket ("the king") (16) and in their upper ends in parallel bolts (1301, 1302) in bearing brackets (1310, 1312) in an intermediate link (26) which further holds a vertically rotatable so-called horizontal arm (2) with a crane beam (3) which further holds the net layer roller (4).

### The so-called horizontal arm

The vertically rotatable horizontal arm (2) comprises a horizontal beam (20) and a horizontal stay (22) which is parallelly mounted in bolts (2201, 2202) in bearing brackets (2601, 2602) in the intermediate link (26) and their outer ends parallelly mounted in bolts (3601, 3602) [2301, 2302)] in bearing brackets (3601, 3602) in the inner end of the crane beam (3).

The net layer roller (4) is bearing on a horizontal pinion gear (43) on a net roller yoke (42) in a revolving gear (41) with vertical axis n the crane arm (3), preferably underneath the crane beam (3).

### About the corkline layer arm's movements

In the net crane according to the embodiment with the above vertical rotation axes directed so that the corkline layer bracket (17) being horizontal and mounted on parallel bolts (1501, 1502) in bearing brackets (1510, 1512) in the vertical arm (1) comprising respectively a vertical beam (10) and a parallel vertical stay (12), please see Fig. 1 and Fig. 2. In this manner the corkline layer arm (5) is linked with the inner am (51), the outer arm (52) and the corkline layer fork (54) rotatable about vertical axes in an essentially common horizontal plane such as shown in Fig. 1.

In an embodiment of the invention the corkline layer bracket (17) comprises an inner slewing bearing (511) which holds an inner arm (51) which outer end has an elbow slewing bearing (512) which holds an outer arm (52) with an outer slewing bearing 8513) which holds a corkline layer fork (54) with the corkline layer sheave (6).

The slewing bearings (511) and (512) build very low and take up large moments in the vertical plane. The use of slewing bearings results in that hydraulic lines (55), please see below, may be led through the center of the slewing bearings.

In an advantageous embodiment the corkline layer bracket (17) holds the inner slewing bearing (511) with vertical rotation axis so as for at least the inner arm (51) to rotate in the horizontal plane. Likewise, in an embodiment, the rotating axis of the elbow slewing bearing (512) is vertical so as for at least the outer arm (52) to rotate in the horizontal plane. The rotation axis of the outer slewing bearing (513) is preferably vertical so as for at least the corkline layer fork (53) to rotate in the horizontal plane. In this manner the corkline layer arm (5) is linked having its inner arm (51), the outer arm (52) and the corkline layer fork (54) rotatable about vertical axes in an essentially common horizontal plane such as shown in Fig. 1.

Fig. 7 is a partial top view and partial section through the vertical arm's (1) vertical beam (10), vertical stay (12) and the corkline layer bracket (17), as an enlarged view seen in the same perspective as in Fig. 5. The bolt (1502) which holds one end of the corkline layer bracket (17) in the vertical stay's (12) bracket (1512) is shown in section, while the bolt (1501) is shown in a view and its corresponding bearing bracket (1510) shown in partial section because they are situated somewhat lower in this embodiment, please see the position of the section in Fig. 2. A ring-shaped flange (514) forms its attachment for the inner slewing bearing (511) to the corkline layer bracket (17). The vertical beam's wide box-shaped profile is, and the vertical stay's position are, in the outset, sufficient for carrying the moment from the corkline layer arm in a position athwart which is exerted of the loaded corkline layer bracket, and may possibly be locally reinforced according to needs.

### The corkline layer arm's hydraulic lines

Hydraulic lines (55), please see Fig. 6, are provided from the crane arm's (0) hydraulic lines via hoses at the corkline layer bracket's attachment to the vertical arm (10). The hydraulic lines (55) are for energy supply to the corkline roller motor (64) and power for at least the elbow slewing bearing (512) and the outer slewing bearing (513). The hydraulic lines (55) are guided internally in at least the inner arm (51).

According to an advantageous embodiment of the invention shown in Fig. 6, the hydraulic lines will comprise hydraulic swivels (56) in at least the inner slewing bearing (511) and in the elbow slewing bearing (512). This is an immediate advantage because it eliminates the risk of fatigue of hydraulic hoses in the slewing bearings (511) and (512), which may both be rotated almost completely around.

In Fig. 6 is shown an embodiment wherein the hydraulic lines (55) further comprise pipes (57) on the outer arm (52) to near its outer end. The hydraulic lines / pipes (55, 57) are in the section in Fig. 6 laid externally on the top of the outer arm (52), a feature which protects the hydraulic lines (55) against collision at least laterally if a possible collision with the crane arm's (0) net layer roller (5) or net roller yoke (42) should occur.

The hydraulic lines (55) are, in an alternative embodiment, led through the outer arm (52) to near its outer end (broken lines in Fig. 6). In such an embodiment the hydraulic lines along their entire extent through the inner arm (51) and the outer arm (52) be better protected in case of a possible collision with the crane arm's (0) net layer roller (4) or the net roller yoke (42).

It is also possible to have a hydraulic swivel in the outer slewing bearing (513) so as for the hydraulic lines (55) to run internally from the outer end of the outer arm (52) to the corkline layer fork (53). At least on the corkline layer fork (53) the hydraulic lines (55) may be arranged on top or underneath so as for being protected against collision from above or laterally, which to some degree will be screened by the corkline layer roller (86) and its circular grid frames (67).

In the shown embodiment, please see Fig. 1 and 2, the corkline layer bracket (17) mounted in the bearing brackets (1510, 1512) is arranged about halfway up in the vertical beam (10) and the parallel vertical stay (12).

### Advantages of having the corkline layer arm on the crane arm

According to an advantageous embodiment of the invention the corkline layer bracket (17) is mounted in the bearing brackets (1510,1512) placed about halfway up in the vertical beam (10) and the parallel vertical stay (12). The corkline layer bracket will follow the movements inwardly and outwardly for the intermediate link (26) and thus essentially the laying roller (4). The corkline layer bracket's horizontal range is determined by its distance from the rotating bearing from the slewing bearing relative to the intermediate link's distance from the slewing bearing; the higher the elevation, the longer the range. In this way the corkline layer bracket will follow the movements inwardly and outwardly for the intermediate link (26) and thus essentially the laying roller (4), and there is a reduced risk of collision between the net layer roller (4) and the corkline layer roller (6). At the same time there is a reduced need for adjusting the separation between the net layer roller (4) and the corkline layer roller (6) because one of them follows the other proportionally according to the geometry of the suspension. In this manner the invention prevents the risk of mutual damage to the net layer roller, the horizontal beam, the corkline layer sheave and the corkline layer arm.

### Simplification of the vessel

A further advantage of the invention is, that due to the corkline layer's foundation is constituted by the corkline layer bracket (17) which is placed on the vertical arm (1), the need for a separate crane foundation in the vessel's structure, and the crane foundation (14) carries them both. The vessel thus becomes somewhat lighter than corresponding ring purse seiners, and the space available for the net bin becomes correspondingly larger, and the design does not have to take account of two crane foundations. Particularly for smaller vessels this may be an essential saving.

### Advantages of retrofitting

An advantage of the invention is that because the design of the net crane itself being essentially such as the existing models, the corkline layer arm according to the invention may easily be retrofitted onto the vertical arm, either by welding the bearing brackets (1510, 1512) onto the vertical beam (10) and the parallel vertical stay (12) of the old kind, respectively, or replace the respective with a new vertical beam (10) and a new vertical stay (12) of the novel kind with bearing brackets, and then mount in the corkline layer bracket (17) in those. In this way owners of a crane of the existing type will only have to acquire a retrofitting unit with the corkline layer bracket and the corkline layer arm in order to achieve a crane according to the invention.

## Claims

1. A purse seine crane with a crane arm (0) with a net layer roller (4),
- wherein said crane arm (0) comprises at least one vertical arm (1) being rotatable in the vertical plane on a rotating bracket (16) which in turn is rotatable about a vertical axis of a slewing bearing (141) on a crane base (14),
- wherein said vertical arm (1) comprises a vertical beam (10) and a parallel vertical stay (12),
**characterized by**
- a corkline stacker arm (5) with a corkline stacker sheave (6),
- wherein said corkline stacker arm (5) is mounted in a corkline stacker bracket (17) on bolts (1501, 1502) in brackets (1510, 1512) in said vertical beam (10) and said vertical stay (12).

2. The purse seine crane according to claim 1, wherein there is arranged hydraulic lines (55) on said corkline stacker arm (5) for a corkline stacker sheave motor (64).

3. The purse seine crane according to claim 1 or 2, **characterized in**
- **that** said corkline stacker bracket (17) comprises an inner slewing bearing (511) which holds an inner arm (51) which outer end has an elbow slewing bearing (512) which holds an outer arm (52) with an outer slewing bearing (513) which holds a corkline stacker fork (54) with said corkline stacker sheave (6).

4. The purse seine crane according to claim 3, wherein said hydraulic lines (55) for said corkline stacker sheave motor (64) and power for at least said elbow slewing bearing (512) and said outer slewing bearing (513) are led internally in at least said inner arm (51).

5. The purse seine crane according to claim 4, wherein said hydraulic lines (55) comprises hydraulic swivels (56) at least in said inner slewing bearing (511) and in said elbow slewing bearing (512).

6. The purse seine crane according to claim 5, wherein said hydraulic lines (55) further comprise pipes (57) on said outer arm (52) to its outer end.

7. The purse seine crane according to claim 5, wherein said hydraulic lines (55) also are led through said outer arm (52) to near its outer end.

8. The purse seine crane according to one of claims 3 - 7, wherein said corkline stacker bracket (17) holds the inner slewing bearing (511) with vertical rotation axis so as for at least said inner arm (51) to rotate in the horizontal plane.

9. The purse seine crane according to one of claims 3 - 8 wherein a rotation axis of said elbow slewing bearing (512) is vertical so as for at least said outer arm (52) rotates in the horizontal plane.

10. The purse seine crane according to one of claims 3 - 9, wherein a rotation axis of said outer slewing bearing (513) is vertical so as for at least said corkline stacker fork (54) to rotate in the horizontal plane.

11. The purse seine crane according to one of claims 1 - 10, wherein said vertical beam (10) and said vertical stay (12) are connected in their lower ends in parallel bolts (1101, 1102) in bearing brackets (1610, 1612) on said rotating bearing (16), and in their upper ends in parallel bolts (1301, 1302) in bearing brackets (1310, 1312) in an intermediate link (26) which holds a vertically rotatable horizontal arm (2) with a crane beam (3) which further holds said net layer roller (4).

12. The purse seine crane according to claim 11, wherein said vertically rotatable horizontal arm (2) comprises a horizontal beam (20) and a horizontal stay (22) which are parallelly connected in bolts (2201, 2202) in bearing brackets (2601, 2602) in said intermediate link (26) and their outer ends parallelly connected in bolts (3601, 3602) in bearing brackets (2601, 2602) in an inner end of said crane beam (3).

13. The purse seine crane according to any of the preceding claims 11 or 12, wherein said net layer roller (4) is bearing on a horizontal pinion (43) on a net roller yoke (42) in a revolving gear (41) with vertical axis on said crane arm (0), preferably beneath said crane beam (3).

14. The purse seine crane according to one of claims 1 - 13, wherein said corkline stacker bracket (17) is mounted in said bearing brackets (1510,1512) placed about halfway up in said vertical beam (10) and said parallel vertical stay (12).

## Patentansprüche

1. Ringwadenkran mit einem Kranarm (0) mit einer Netzlegerolle (4),
- wobei besagter Kranarm (0) mindestens einen vertikalen Arm (1) umfasst, der in vertikaler Ebene auf einem rotierenden Halter (16) drehbar ist, der seinerseits um eine vertikale Achse einer Drehverbindung (141) an einem Kransockel (14) drehbar ist,
- wobei besagter vertikaler Arm (1) einen Vertikalträger (10) und eine parallele Vertikalstrebe (12) umfasst,
**gekennzeichnet durch**
- einen Korkleinenstapelvorrichtungsarm (5) mit einer Korkleinenstapelvorrichtungsrolle (6),
- wobei besagter Korkleinenstapelvorrichtungsarm (5) an einer Korkleinenstapelvorrichtungshalterung (17) mit Bolzen (1501, 1502) in Halterungen (1510, 1512) an besagtem Vertikalträger (10) und besagter Vertikalstrebe (12) befestigt ist.

2. Ringwadenkran nach Anspruch 1, wobei Hydraulikleitungen (55) an besagtem Korkleinenstapelvorrichtungsarm (5) für einen Korkleinenstapelvorrichtungsrollenmotor (64) angeordnet sind.

3. Ringwadenkran nach Anspruch 1 oder 2,
**dadurch gekennzeichnet, dass**
- besagte Korkleinenstapelvorrichtungshalterung (17) ein Innendrehlager (511) aufweist, das einen Innenarm (51) hält, dessen äußeres Ende eine Ellenbogendrehverbindung (512) hat, welche einen Außenarm (52) mit einer Außendrehverbindung (513) hält, welche eine Korkleinstapelvorrichtungsgabel (54) mit besagter Korkleinstapelvorrichtungsrolle (6) hält.

4. Ringwadenkran nach Anspruch 3, wobei besagte Hydraulikleitungen (55) für besagten Korkleinenstapelvorrichtungsrollenmotor (64) und die Energie für zumindest besagte Ellenbogendrehverbindung (512) und besagte Außendrehverbindung (513) intern zumindest in besagtem Innenarm (51) geführt werden.

5. Ringwadenkran nach Anspruch 4, wobei besagte Hydraulikleitungen (55) zumindest in besagten Innendrehlager (511) und in besagter Ellenbogendrehverbindung (512) hydraulische Drehgelenke (56) umfassen.

6. Ringwadenkram nach Anspruch 5, wobei besagte Hydraulikleitungen (55) des weiteren Rohre (57) an besagtem Außenarm (52) an seinem äußeren Ende umfassen.

7. Ringwadenkram nach Anspruch 5, wobei besagte Hydraulikleitungen (55) ebenfalls durch besagten Außenarm (52) in die Nähe seines äußeren Endes geführt werden.

8. Ringwadenkran nach einem der Ansprüche 3-7, wobei besagte Korkleinenstapelvorrichtungshalterung (17) das Innendrehlager (511) mit der vertikalen Drehachse so hält, dass sich zumindest der Innenarm (51) in der horizontalen Ebene dreht.

9. Ringwadenkran nach einem der Ansprüche 3-8, wobei eine Drehachse der besagten Ellenbogendrehverbindung (512) vertikal ist, so dass sich zumindest besagter Außenarm (52) in der horizontalen Ebene dreht.

10. Ringwadenkran nach einem der Ansprüche 3-9, wobei eine Drehachse der besagten Außendrehverbindung (513) vertikal ist, so dass sich zumindest besagte Korkleinenstapelvorrichtungsgabel (54) in der horizontalen Ebene dreht.

11. Ringwadenkran nach einem der Ansprüche 1-10, wobei besagter vertikaler Arm (10) und besagte Vertikalstrebe (12) an ihren unteren Enden parallel mit Bolzen (1101, 1102) in Lagerhalterungen (1610, 1612) an besagten rotierenden Halter (16) befestigt sind und ihre oberen Enden parallel mit Bolzen (1301, 1302) in Lagerhalterungen (1310, 1312) in einem Bindeglied (26) befestigt sind, das einen vertikal drehbaren Horizontalarm (2) trägt mit einem Kranbalken (3) der des Weiteren besagte Netzlegerolle (4) hält.

12. Ringwadenkran nach Anspruch 11, wobei besagter vertikal drehbarer Horizontalarm (2) einen Horizontalträger (20) und eine Horizontalstrebe (22) umfasst, die parallel mit Bolzen (2201, 2202) in Lagerhalterungen (2601, 2602) in besagten Bindeglied (26) verbunden sind und deren äußere Enden parallel mit Bolzen (3601, 3602) in Lagerhalterungen (2601, 2602) an einem inneren Ende des besagten Kranbalkens (3) verbunden sind.

13. Ringwadenkran nach einem der vorangehenden Ansprüche 11 oder 12, wobei besagte Netzlegerolle (4) auf einem horizontalen Ritzel (43) an einem Netzrollenbügel (42) in einem Umlaufgetriebe (41) gelagert ist mit einer Vertikalachse an dem Kranarm (0), vorzugsweise unterhalb des besagten Kranbalkens (3).

14. Ringwadenkran nach einem der Ansprüche 1-13, wobei besagte Korkleinenstapelvorrichtungshalterung (17) an besagten Halterungen (1510, 1512) etwa auf halber Höhe von besagtem Vertikalträger (10) und besagter paralleler vertikaler Strebe (12) befestigt ist.

## Revendications

1. Grue à senne coulissante avec un bras de grue (0) avec un rouleau de pose de filet (4),
- dans laquelle ledit bras de grue (0) comprend au moins un bras vertical (1) pouvant tourner dans le plan vertical sur un support rotatif (16) qui à son tour peut tourner autour d'un axe vertical d'un palier (141) d'orientation sur un socle de grue (14)
- dans laquelle ledit bras vertical (1) comprend une poutre verticale (10) et une baguette (12) verticale et parallèle, **caractérisée par**
- un bras (5) d'empileur de ligne de flotteurs avec une poulie (6) d'empileur de ligne de flotteurs,
- dans laquelle ledit bras (5) d'empileur de ligne de flotteurs est monté sur un support (17) d'empileur de ligne de flotteurs sur des boulons (1501, 1502) entre des supports (1510, 1512) dans ladite poutre verticale (10) et ladite baguette (12) verticale.

2. Grue à senne coulissante selon la revendication 1, dans laquelle il est prévu des lignes hydrauliques (55) sur ledit bras (5) d'empileur de ligne de flotteurs pour un moteur (64) de poulie d'empileur de ligne de flotteurs.

3. Grue à senne coulissante selon la revendication 1 ou 2, **caractérisé en ce**
- **que** ledit support (17) d'empileur de ligne de flotteurs comprend un palier intérieur (511) d'orientation qui maintient un bras intérieur (51) dont l'extrémité externe comporte un palier (512) d'orientation de coude qui maintient un bras extérieur (52) avec un palier (513) extérieur d'orientation qui maintient une fourche (54) d'empileur de ligne de flotteurs avec ladite poulie (6) d'empileur de ligne de flotteurs.

4. Grue à senne coulissante selon la revendication 3, dans laquelle lesdites conduites hydrauliques (55) pour ledit moteur (64) de poulie d'empileur de ligne de flotteurs et de puissance pour au moins ladite extrémité externe comporte un palier et ledit palier (513) extérieur d'orientation sont dirigés à l'intérieur d'au moins ledit bras intérieur (51).

5. Grue à senne coulissante selon la revendication 4, dans laquelle lesdites lignes hydrauliques (55) comprennent des émerillons hydrauliques (56) au moins dans ledit palier intérieur (511) d'orientation, et ledit palier (512) d'orientation de coude.

6. Grue à senne coulissante selon la revendication 5, dans laquelle lesdites conduites hydrauliques (55) comprennent en outre des tuyaux (57) sur ledit bras extérieur (52) à son extrémité extérieure.

7. Grue à senne coulissante selon la revendication 5, dans laquelle lesdites lignes hydrauliques (55) sont également dirigées à travers ledit bras extérieur (52) à proximité de son extrémité extérieure.

8. Grue à senne coulissante selon l'une quelconque des revendications 3 à 7, dans laquelle le support (17) d'empileur de ligne de flotteurs maintient le palier intérieur (511) d'orientation avec un axe de rotation vertical, de sorte qu'au moins ledit bras intérieur (51) puisse tourner dans le plan horizontal.

9. Grue à senne coulissante selon l'une quelconque des revendications 3 à 8, dans laquelle un axe de rotation dudit palier (512) d'orientation de coude est vertical, de sorte qu'au moins ledit bras extérieur (52) puisse tourner dans le plan horizontal.

10. Grue à senne coulissante selon l'une quelconque des revendications 3 à 9, dans laquelle un axe de rotation dudit palier (513) extérieur d'orientation est vertical, de sorte qu'au moins ladite fourche (54) d'empileur de ligne de flotteurs puisse tourner dans le plan horizontal.

11. Grue à senne coulissante selon l'une quelconque des revendications 1 à 10, dans laquelle ladite poutre verticale (10) et ladite baguette (12) verticale sont reliées à leurs extrémités inférieures à des boulons parallèles (1101, 1102) dans des supports de palier (1610, 1612) sur ledit support rotatif (16), et leurs extrémités supérieures dans les boulons parallèles (1301, 1302) dans des supports de palier (1310, 1312) dans une liaison intermédiaire (26), qui maintient un bras (2) horizontal de rotation verticale avec une poutre de grue (3) qui maintient en outre ledit rouleau de pose de filet (4).

12. Grue à senne coulissante selon la revendication 11, dans laquelle ledit bras (2) horizontal de rotation verticale comprend une poutre horizontale (20) et une baguette (22) horizontale qui sont reliées parallèlement dans des boulons (2201, 2202) dans des supports de palier (2601, 2602) dans ladite liaison intermédiaire (26) et leurs extrémités extérieures, reliées en parallèle dans des boulons (3601, 3602) dans les supports de paliers (2601, 2602) à une extrémité intérieure de ladite poutre de grue (3).

13. Grue à senne coulissante selon l'une quelconque des revendications précédentes 11 ou 12, dans laquelle ledit rouleau de pose de filet (4) est en appui sur un pignon horizontal (43) sur une culasse de rouleau filet (42) dans un engrenage rotatif (41) avec un axe vertical sur ledit bras de grue (0), de préférence en dessous de ladite poutre de grue (3) .

14. Grue à senne coulissante selon l'une quelconque des revendications 1 à 13, dans laquelle ledit support (17) d'empileur de ligne de flotteurs est monté dans lesdits supports de paliers (1510, 1512) placés à mi-hauteur de ladite poutre verticale (10) et ladite baguette (12) vertical et parallèle.
